# EUROPEAN PATENT APPLICATION

(11) **EP 1 096 645 A2**
(43) Date of publication of application: **02.05.2001**
(21) Application number: 00203407.2
(22) Date of filing: 02.10.2000
(51) Int. Cl.: H02K 3/18, H02K 19/26

(54) **Electric generator**

(30) Priority: 28.10.1999 GB 9925387
(71) Applicant: Delphi Technologies, Inc., Troy, MI 48007 (US)
(72) Inventor: Mlynarz, Richard, 95530 La Frette/Seine (FR)
(74) Representative: Denton, Michael John

(57) **Abstract**

An electric generator (10) comprising a stator (12) which is substantially annular; a shaft (16) having a longitudinal axis (A); a rotor (14) mounted on the shaft inside the stator and rotatable about the axis; and a housing (18) around the stator and the rotor; wherein the rotor is a salient pole rotor having an even number of poles (20), a first winding (22) of electric wire through the poles along a first path, and a second winding (24) of electric wire through the poles along a second path which is different from the first path, the first and second windings being electrically connected. Easier manufacture and balancing.

## Description

### Technical Field

The present invention relates to an electric generator having a rotor.

### Background of the Invention

An electric generator typically includes a stator having a stator winding, a rotor having a rotor winding and rotatably positioned inside the stator, and a housing surrounding the stator and the rotor. The rotor winding is usually formed as a single winding of suitable electric wire. For generators having a salient pole rotor, such an arrangement is difficult to manufacture, and can lead to imbalance in the finished rotor.

### Summary of the Invention

It is an object of the present invention to overcome the above mentioned problem.

An electric generator in accordance with the present invention comprises a stator which is substantially annular; a shaft having a longitudinal axis; a rotor mounted on the shaft inside the stator and rotatable about the axis; and a housing around the stator and the rotor; wherein the rotor is a salient pole rotor having an even number of poles, a first winding of electric wire through the poles along a first path, and a second winding of electric wire through the poles along a second path which is different from the first path, the first and second windings being electrically connected.

The present invention, by using two rotor windings, is easier to manufacture and easier to balance.

### Brief Description of the Drawings

The present invention will now be described, by way of example, with reference to the accompanying drawings, in which:-
Figure 1 is a schematic cross-sectional view of an electric generator in accordance with the present invention; and
Figure 2 is an end view of the stator (with windings omitted for clarity) and the rotor of the electric generator of Figure 1.

### Description of the Preferred Embodiment

Referring to the drawings, the electric generator 10 in accordance with the present invention has particular application in a motor vehicle. The generator 10 includes a stator 12 which is annular and has a stator winding; and a rotor 14 which is mounted on a shaft 16 and rotatable about the longitudinal axis A of the shaft. The rotor 14 is positioned inside the stator 12, and the rotor and stator are positioned inside a housing 18 with the shaft 16 extending out of the housing. Electrical connections (not shown) are provided to the stator 12 and to the rotor 14 in any suitable arrangement known to those skilled in the art, and will not be described in further detail.

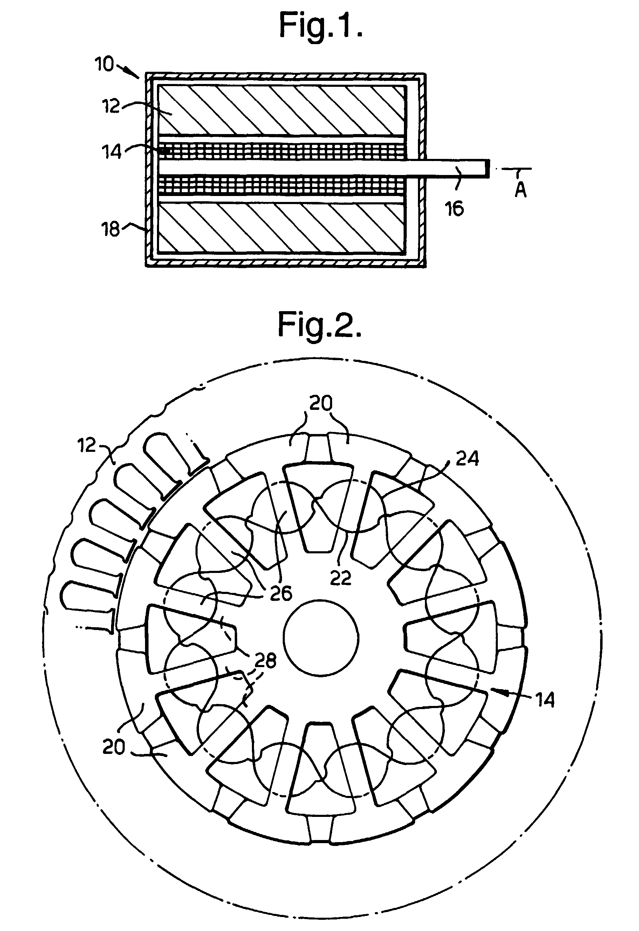

The rotor 14 (as shown in Figure 2) is a salient pole rotor and has twelve poles 20 (although the present invention could be used with the rotor having any even number of poles). Each pole 20 is preferably substantially T-shaped as shown in Figure 2, and may have a magnet positioned between adjacent poles at their outer circumference.

The rotor 14 has two separate windings 22,24 (although the present invention could be used with the rotor having any even number of windings) of electrical wire, with the windings being progressively offset. That is, the first winding 22 passes along a first undulating path passing on one side 26 of even numbered (alternate) poles 20 and passing on the other side 28 of the odd numbered (intermediate) poles, whereas the second winding 24 passes along a second undulating path passing on the other side 28 of the even numbered (alternate) poles and passing on the one side 26 of the odd numbered (intermediate) poles. The first and second paths for the first and second windings 22,24 are therefore different from one another. After the winding process (in which the first and second windings 22,24 are wound simultaneously), the first and second windings 22,24 may be either electrically connected in series, or electrically connected in parallel. Where additional pairs of first and second windings are used, the first winding of each pair is wound on the first path, and the second winding of each pair is wound on the second path.

The present invention provides an electric generator 10 in which the rotor 14 has two separate windings 22,24 in which the windings are progressively offset from one another. Such an arrangement provides for easier manufacture and easier balancing (when compared to a single winding). The present invention also allows an increase in the number of turns which can be wound on the rotor when compared to a single winding.

## Claims

1. An electric generator (10) comprising a stator (12) which is substantially annular; a shaft (16) having a longitudinal axis (A); a rotor (14) mounted on the shaft inside the stator and rotatable about the axis; and a housing (18) around the stator and the rotor; wherein the rotor is a salient pole rotor having an even number of poles (20), a first winding (22) of electric wire through the poles along a first path, and a second winding (24) of electric wire through the poles along a second path which is different from the first path, the first and second windings being electrically connected.

2. An electric generator as claimed in Claim 1, wherein the first and second windings (22,24) are electrically connected in series.

3. An electric generator as claimed in Claim 1, wherein the first and second windings (22,24) are electrically connected in parallel.

4. An electric generator as claimed in any one of Claims 1 to 3, wherein the rotor (14) has one or more additional pairs of windings of electric wire, with the first winding of the or each additional pair passing along the first path, and with the second winding of each additional pair passing along the second path.
